# EUROPEAN PATENT SPECIFICATION

(11) **EP 1 149 330 B1**
(45) Date of publication and mention of the grant of the patent: **03.09.2003**
(21) Application number: 99972317.4
(22) Date of filing: 16.11.1999
(51) Int. Cl.: G05B 19/4097

(54) **A METHOD OF MODELING THE FORMING OF ANISOTROPIC SHEET**
VERFAHREN ZUM MODELLIEREN DER FORMUNG EINES ANISOTROPISCHEN MATERIALS
PROCEDE DE MODELISATION DU FA ONNAGE D'UNE FEUILLE ANISOTROPE

(30) Priority: 18.11.1998 US 108844 P
(43) Date of publication of application: 31.10.2001
(73) Proprietor: ALCAN INTERNATIONAL LIMITED, Montreal Quebec H3A 3G2 (CA)
(72) Inventor: MACEWEN, Stuart, Inverary, Ontario K0H 1X0 (CA); WU, Pei-Dong, Kingston, Ontario K7P 1P5 (CA)
(74) Representative: Boydell, John Christopher
(86) International application number: CA9901087
(87) International publication number: WO00029918

(56) References cited:
- US-A- 4 658 362
- US-A- 5 341 303
- US-A- 5 402 366
- US-A- 5 463 558
- US-A- 5 729 462
- US-A- 6 009 378
- PICKETT A K ET AL: "AN EXPLICIT FINITE ELEMENT SOLUTION FOR THE FORMING PREDICTION OF CONTINUOUS FIBRE-REINFORCED THERMOPLASTIC SHEETS" , COMPOSITES MANUFACTURING,GB,BUTTERWORTH SCIENTIFIC, GUILDFORD, SURREY, VOL. 6, NR. 3/04, PAGE(S) 237-243 XP000557935 ISSN: 0956-7143

## Description

### TECHNICAL FIELD

The present invention generally relates to the shaping of deformable materials, and more particularly to a method of forming metal sheet into useful articles, wherein tooling is designed using mathematical models that rely on finite element analysis (FEA) techniques to optimize forming operations, tooling design and product performance in the formed articles.

### BACKGROUND ART

Many articles are made by stamping, pressing or punching a base material so as to deform it into a piece or part having a useful shape and function. The present invention is concerned with mathematical modeling of the mechanics of such material flow and deformation, and is particularly concerned with the deformation of metal (e.g., aluminum) sheet using tools and dies, to produce a wide variety of products, from beverage cans to components for automotive applications.

When designing the shape of a product, such as a beverage can, it is important to understand how the deformation process will affect the blank of sheet metal. Finite element analysis codes, available from a variety of companies, can be used to analyze plasticity, flow and deformation to optimize forming operations, tooling design and product performance in product designs. These models may result in tooling which improves the quality of a product as well as reducing its cost. The predictive capability of such finite element models is determined to a large extent by the way in which the material behavior is described therein.

In order to appreciate the complexities of modeling the deformation process, it is helpful to understand some basic concepts of mechanical metallurgy, including the concepts of yield stress, workhardening, and strain path.

When some type of external loading device, such as a tensile test machine deforms a metal, the initial response is elastic, with a linear relationship between stress and strain. At some value of the stress, determined by the microstructure of the metal, plastic deformation begins and the response is non-linear, and comprises elastic plus plastic deformation. The yield stress defines the strength of the metal at the condition where plastic deformation is initiated.

Deformation beyond the yield stress is characterized by workhardening which causes the stress to increase at an ever decreasing rate until a failure mechanism intervenes and the sample breaks. Thus, the yield stress value and the workhardening curve are the two fundamental entities that define the plastic deformation of metals.

The forming of metal sheet into industrial or consumer products (e.g., cans and automotive components) occurs under multi-axial straining conditions, not the simple uniaxial path described above (tensile testing). In such cases the deformation is described by the strain path. The strain path is defined by the plastic strain tensor.

A tensor is a mathematical entity that is useful in describing various physical properties. Most physical properties can be expressed as either a scalar, a vector, or a tensor.

A scalar quantity is one which can be specified with a single number (e.g., temperature or mass), while a vector quantity is one which requires two values, such as magnitude and direction (e.g., velocity or force).

A tensor quantity is a higher-order entity that requires more than two values, i.e., more than a single magnitude and direction. For example, a stress tensor is a 3x3 array, each term of which is defined by the stress acting on a given plane, in a given direction. As two direction cosines are required for transformations, the stress tensor is a second order tensor.

The plastic strain (or strain rate) tensor is a second order tensor, which can be expressed as a 3x3 matrix and, in principal axes, has the form:

| | | |
|---|---|---|
| a | 0 | 0 |
| 0 | b | 0 |
| 0 | 0 | c |

Common strain paths and their associate values for the plastic strain tensor components are given below:

| STRAIN PATH | a | b | c |
|---|---|---|---|
| Uniaxial tension | -0.5 | 1 | -0.5 |
| Uniaxial Compression | 0.5 | -1 | 0.5 |
| Biaxial tension | 0.5 | 0.5 | -1 |
| Plane Strain Tension | 0 | 1 | -1 |
| Plane Strain Compression | 0 | -1 | 1 |

The concepts of the uniaxial stress-strain curve are extended to multi-axial plasticity by defining an effective stress and an effective strain, σ_{eff} and ε_{eff}, which are functions of the components of the stress and plastic strain tensors. The concepts of the yield stress and workhardening are then extended to multi-axial conditions through the use of σ_{eff} and ε_{eff} in place of the σ and ε of the uniaxial case.

Specifically, the effective stress is given by the second invariant of the stress tensor, and plasticity is referred to as either J₂ or von Mises.

For an isotropic sheet of metal, the plasticity properties do not depend on direction or strain path, and the uniaxial stress-strain curve is all that is required to characterize the forming of sheet into a product. When aluminum sheet is rolled, however, it is anisotropic, meaning that some of the mechanical properties will not be the same in all directions.

Because rolled sheet is anisotropic, yield stress as well as workhardening depend on both direction in the sheet and strain path. For example, in aluminum can body stock, the stress-strain curve for a sample cut with its tensile axis in the rolling direction lies below that for a sample cut in the transverse direction. Under multi-axial stress conditions one must now replace the concept of a yield point with that of a yield surface which, in multidimensional stress space, defines the boundary between elastic and plastic response.

Workhardening manifests itself as an increase in the distance from the origin of stress to a point on the yield surface. One must also allow for the possibility that the workhardening rate may depend on the strain path. Thus, workhardening changes not only the size of the yield surface, but also its shape.

The anisotropy of sheet is determined by crystallographic texture, that is, by the orientations of the crystals that make up the sheet. As single crystal properties are highly anisotropic, the anisotropy of sheet depends on the distribution of orientations of the crystals that comprise it. Therefore, the orientation distribution function (ODF) is a fundamental property of sheet. There are various types of analysis programs that use crystallographic texture.

The crystallographic texture of sheet, in the form of pole figures, is obtained experimentally using X-ray or neutron diffraction. The ODF and the weights table are calculated from the pole figure data. The latter is particularly important as it defines the volume fraction of crystals having a particular orientation. Typically, the weights for at least 600 discrete orientations are determined by analysis of experimental diffraction data and provide the crucial input for crystal plasticity calculations.

One analysis technique that uses crystallographic texture is the material point simulator (MPS), which uses crystal plasticity theory to calculate the response of a small amount of material subject to a specified strain path. The response of the aggregate is calculated from the weighted responses to each of the crystals contained in it. Single crystal yield stress and workhardening parameters are determined by an iterative procedure to match prediction from the simulation to a measured stress-strain curve (generally uniaxial tension or compression).

Having determined the single crystal properties, the stress strain behavior for any desired strain path can be calculated. In addition to conventional workhardening, the calculations usually include the evolution of texture during deformation along the strain path. In fact, comparison of measured and predicted textures after deformation provides the principal means of validation of material point simulators.

A further analysis technique that is used to model the forming and performance of products from sheet is finite element analysis (FEA). An FEA subdivides the sheet into a number of elements, typically from a few hundred for a simple analysis to 100,000 or more for complex parts and forming processes.

The tooling used to form a part is also meshed, and contact between the tooling and sheet is allowed so that the simulated motion of the tooling in the model deforms the sheet and makes a virtual part just as real tooling makes a part in a plant. Therefore, it is not necessary to know *a priori* the strain path followed by each element during the forming operation; it is simply a response to the motion of the tooling.

Examples of the use of FEA for forming products from sheet are given in U.S. Patents Nos. 5,128,877, 5,379,227, 5,390,127, and 5,402,366. The first three of these patents disclose methods for aiding sheet metal forming tools, which include representing the sheet metal as a mesh and including a plurality of nodes and associated elements. A computer determines the stress state of a sampling point based on an incremental deformation theory of plasticity (the described "displacement method" is an FEA). The fourth patent discloses a method for simulating a forming operation using FEA and a particle flow model. These approaches do not involve any distinction between the anisotropic and isotropic characteristics of the sheet.

The plasticity properties of an individual element (or, more precisely, at each integration point within an element) are defined by the definitions of the yield surface and the hardening law, which comprise the essential material definitions required for the analysis.

The vast majority of FEA use isotropic, von Mises plasticity for the former and a simple uniaxial stress-strain curve for the latter.

A difficulty often exists in that the strains for a forming operation may exceed (in some cases by a factor of 10 or more) those achieved in the laboratory characterization of the sheet. In such a case, the FE analyst must provide the code with an extrapolation of the experimental data to strains in excess of those imposed by the tooling during the forming operation. This requirement is not a trivial task, as the hardening depends on both strain and strain path, due to the evolution of texture during the forming operation.

In many cases and especially for aluminum alloy sheet, anisotropy should be included in an FEA. Two basic options exist to do so. Over the past 50 years, a variety of analytical functions have been proposed to replace that of the isotropic von Mises. Notable are formulations by Hill in 1948, 1979, and 1990, Karafillis & Boyce in 1993, and Barlat in 1989, 1991 and 1997. The analytical function approach suffers two difficulties.

First, since the function is a relatively simple, closed-form, algebraic expression it can only provide an approximation to the shape of the actual yield surface in six-dimensional stress space. In fact, in many cases the allowable stress space for analytical yield functions has been reduced to those appropriate for plane stress deformation.

Secondly, the constants in these functions must be determined experimentally, from laboratory measurements of the anisotropy of the yield stress and/or r-value (ratio of width to thickness strain in a tensile test) for various strain paths and directions in the sheet. Typically, five or more experimental measurements must be made in order to evaluate the constants of an analytical yield function.

The second option is to use crystal plasticity to define the properties of each element. In essence, this means running a material point simulator calculation for each integration point of each element at each iteration of the FEA. While use of analytical functions increase computer processing (CPU) time by about a factor of two or three compared to a von Mises calculation, use of fully-coupled crystal plasticity can increase CPU time by orders of magnitude, and currently is feasible for only the smallest of models and is not practical for simulation of any real forming operation.

It would, therefore, be desirable to provide a method of including consideration of anisotropy in an FEA without paying the enormous cost of requiring a full crystal plasticity calculation for every iteration (or even every tenth or hundredth iteration) of an analysis. It would be further advantageous if the method could include a characterization of yield surface and hardening that was defined in a six-dimensional stress space simulated by the FEA.

### DISCLOSURE OF THE INVENTION

It is therefore one object of the present invention to provide an improved method of forming sheet metal into various articles.

It is another object of the present invention to provide such a method which uses mathematical (computational) models to optimize tooling designs and forming operations to give desired properties in the formed articles.

It is yet another object of the present invention to provide such a mathematical model that relies on finite element analysis (FEA) techniques, and takes into account anisotropic properties of the metal sheet without requiring excessive computational time.

It is the principal object of the present invention to provide a method to incorporate anisotropy in to a finite element analysis without the normal penalty in CPU time for doing so by decoupling the anisotropy calculations from the finite element calculations.

In accordance with a first aspect of the invention, there is provided a method of fabricating an article, comprising the steps of:
(a) creating a blank of material having anisotropic mechanical properties;
(b) designing tooling for manufacture of the article by predicting the flow and deformation of the blank using a forming analysis in which an isotropic finite element analysis (isotropic FEA) of the blank is used along with a separate, decoupled, analysis of the anisotropic deformation properties of the blank; and
(c) forming the article from the blank using tooling designed from step (b).

In accordance with a second aspect of the invention, there is provided a computer system having a storage device, and a processing unit connected to the storage device, whereby program means are stored on the storage device, and are adapted to be executed by the processing unit, for predicting the flow and deformation of a blank of material having anisotropic deformation properties, using a forming analysis in which an isotropic finite element analysis (isotropic FEA) of the blank is used along with a separate, decoupled analysis of the anisotropic deformation properties of the blank.

In accordance with a third aspect of the invention, there is provided a computer program product having a storage medium adapted to be read by a computer and including program means stored on the storage medium for predicting the flow and deformation of a blank of material having anisotropic deformation properties, using a forming analysis in which an isotropic finite element analysis (isotropic FEA) of the blank is used along with a separate, decoupled analysis of the anisotropic deformation properties of the blank.

In an embodiment, the following four steps may be used in an analysis of a forming operation:
1. Uniaxial tension (or compression) curves and crystallographic texture data obtained experimentally from the sheet are used to calibrate the constants in an appropriate crystal plasticity material point simulator. The material point simulator can then be used to generate effective stress - effective strain curves for a variety of possible strain paths. These will form a set with an upper and lower bound.
2. The finite element analysis is preferably done using a local co-ordinate system that follows the rigid-body motion of the sheet during forming. In this way, the plastic strain (or strain rate) tensor will always be defined in a co-ordinate system consisting of directions parallel to the rolling direction, perpendicular to the rolling direction and through the thickness of the sheet. Steps one and two define the anisotropy needed for the FEA.
3. The strain path must be determined for each finite element at every converged step (or at predetermined intervals in the analysis). This can be achieved in a variety of ways, with increasing complexity:
   by inspection of the geometry of the tooling and forming operation, (e.g., rolling or ironing operations) or
   by performing an *isotropic* analysis using a single stress-strain curve (say uniaxial tension) of the forming operation and extracting the required strain path in a post-processing mode for each element, or
   by calculating at each converged step of analysis a parameter that depends on the particular state of the strain tensor for each element.
4. An appropriate stress strain curve for each element is then selected from the family of curves described in (1) above. In the simplest case, the lower bound is chosen for all elements (independent of their actual paths). This gives a lower bound analysis with the lower limits for stresses in the sheet and tooling loads. The next level of sophistication is to define groups of elements having like strain paths (e.g., a set comprising the dome of a bulge) and assign one of the stress-strain curves from the set described in (1) above to each group.

The procedure is seen as analogous to defining temperature-dependent stress strain curves in a finite element model, with the parameter defining the strain path taking the place of temperature.

The result is a finite element model that is in close agreement with experimentally-generated data, and one that requires much less computational (CPU) time compared to prior art methods.

The above as well as additional objectives, features, and advantages of the present invention will become apparent in the following detailed written description.

### BRIEF DESCRIPTION OF THE DRAWINGS

The novel features believed characteristic of the invention are set forth in the appended claims. The invention itself, however, as well as a preferred mode of use, further objectives, and advantages thereof, will best be understood by reference to the following detailed description of an illustrative embodiment when read in conjunction with the accompanying drawings, wherein:
Figure 1 is a perspective view of a rolling process used to form metal sheet having anisotropic properties, which properties are included in an analysis of tooling, performed in accordance with the present invention;
Figure 2 is a sectional view of tooling adapted for forming a can bottom from aluminum alloy sheet, wherein finite element analysis is performed to optimize the tooling design and the forming operation using the novel approach to describing the anisotropic material properties of the blank in accordance with the present invention;
Figure 3 is a chart depicting the logic flow in carrying out a finite element analysis (FEA) of a forming model according to the present invention, such that anisotropic properties of the metal sheet are decoupled from the analysis;
Figure 4 is a block diagram of a computer system which may be adapted to carry out the FEA according to the present invention; and
Figure 5 is a chart depicting the logic flow in designing the tooling and the forming operations required to produce a part with optimum properties using the plasticity model according to the present invention.

### BEST MODE(S) FOR CARRYING OUR THE INVENTION

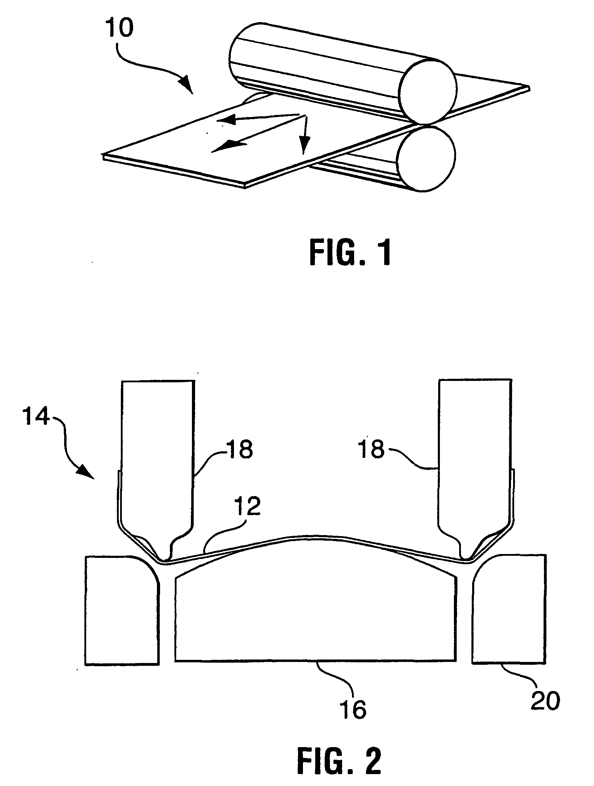

With reference now to the figures, and in particular with reference to Figure 1, there is depicted the creation of a metal sheet 10 using a conventional rolling process. As explained further below, various articles may be fabricated from sheet 10. The forming operations and the performance of such products may be optimized in accordance with the present invention. Sheet 10 may be formed from, e.g., rolled aluminum alloy. The mechanical (deformation) properties of sheet 10 are anisotropic, as a result of the orientations of the crystals that make up the sheet. Thus mechanical properties vary for different directions in the sheet, as indicated by the three arrows in Figure 1.

With further reference to Figure 2, a blank 12 cut from sheet 10 is shaped into an article using tooling 14. Tooling design and operation and the properties of the product produced can be optimized by FEA, in accordance with the present invention. In the depicted embodiment, a generic representation of the tooling used to produce a can bottom, the tooling 14 is generally comprised of a punch 18, a die (or domer plug) 16 and a retainer ring 20. Tooling 14 may include other conventional components such as a ram or piston (not shown) which is attached to punch 18, whereby punch 18 may be forced into die 16 to form blank 12 into the desired shape.

The components of tooling 14 may be constructed using conventional materials, particularly tool steel or tungsten carbide. In this particular implementation, the tooling is designed to form blank 12 into the base of a beverage can. Those skilled in the art will appreciate, however, that the present invention is not limited to this example, as it can be used to design tooling for a wide assortment of finished products and component parts having various sizes and shapes.

The present invention provides a novel computational model for simulating deformation and flow of materials, particularly metal sheet blanks such as blank 12. This model can then be used to optimally design tooling and select material specifications (such as the thickness of the blank).

As noted above, conventional analysis techniques use finite element analysis (FEA) to model plasticity and formability. The present invention improves upon these techniques by incorporating anisotropic properties of the blank into a finite element model. The novel computational model achieves this effect by decoupling the anisotropic calculations from the FEA, as explained further below. The result is a model that is not only in close agreement with experimentally-generated data, but that also requires much less computational (CPU) time to run to completion than conventional models that simulate the forming of anisotropic sheet, and hence is much less expensive to carry out.

According to an illustrative implementation of the present invention, a material point simulator (MPS) calculation is decoupled from the FEA, thereby allowing an isotropic FEA plasticity model to capture anisotropy. As noted above, the objective of the FEA is to be able to predict the response of a product to external loading conditions, which often lead to mechanical instability and snap-through or buckling. When a validated performance prediction is required, a forming model must be run prior to the performance model, in order to calculate metal thinning, levels of workhardening and residual stresses prior to the imposition of the performance test loading.

For both the forming and performance models, which together constitute the FEA, choice of the appropriate description of the material behavior is critical to the predictive capability of the FEA. According to an illustrative implementation of the present invention, a material point simulator (MPS) calculation is decoupled from the FEA, thereby allowing an isotropic (von Mises) plasticity model to capture material anisotropy.

MPS calculations require experimental measurements of the crystallographic texture and at least one stress-strain curve, used to calibrate the hardening law in the MPS. The so-calibrated MPS calculates a set of stress-strain curves for various strain paths commonly found in forming operations. This set of curves will have well-defined upper and lower bounds.

Therefore, the appropriate curve for any specified strain path lies between two well-defined limits. The FEA calculations require definition of the geometry and path of the tooling (generally achieved using an appropriate CAD package), meshing of the tooling and the blank (e.g., the sheet to be formed into a component), definition of the boundary conditions between the tooling and the blank and, most importantly, the assigning of a material stress-strain curve to each element.

The latter step can, according to this invention, be done in two ways: prior to running the finite element analysis or during the analysis itself. For the former, the appropriate stress-strain curve for an element or group of elements can be assigned by inspection and understanding of the general nature of the interaction of the tooling with the blank or by performing an isotropic analysis (prior to the desired FEA) to determine the strain path for each element of group of elements and thereby allowing an appropriate stress-strain path to be assigned to each.

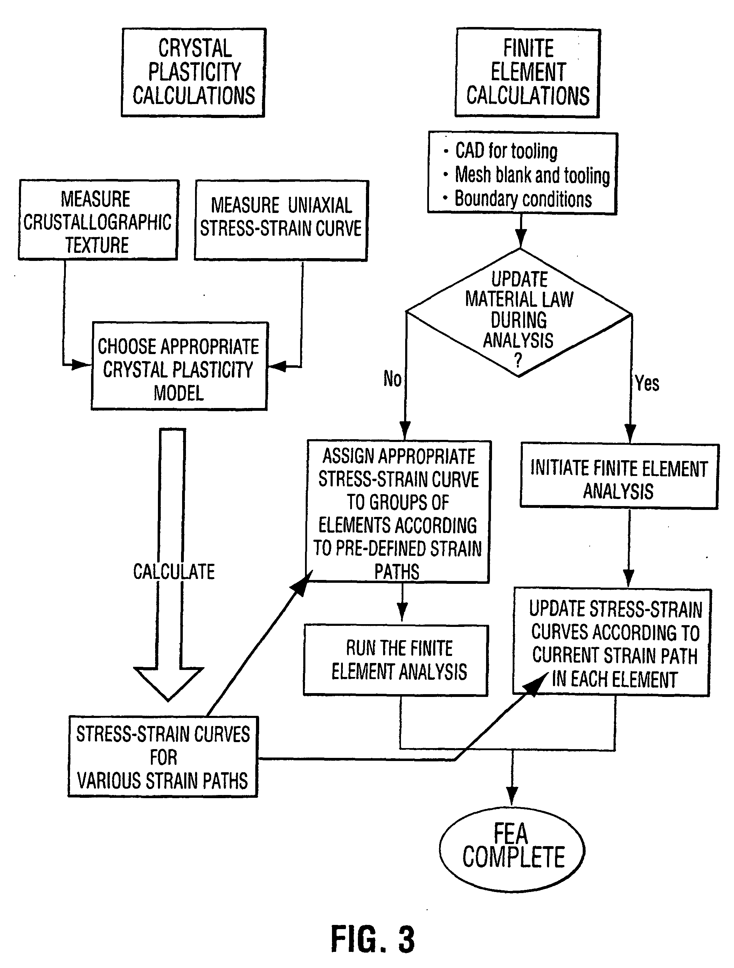

Alternatively, the assignment of the appropriate stress-strain curve may be updated at each converged step, or at regular intervals of converged steps, in the analysis by relating the current plastic strain tensor for each element to one of the set of stress-strain curves defined previously. The foregoing method of decoupling material anisotropy from the FEA is summarized in Figure 3.

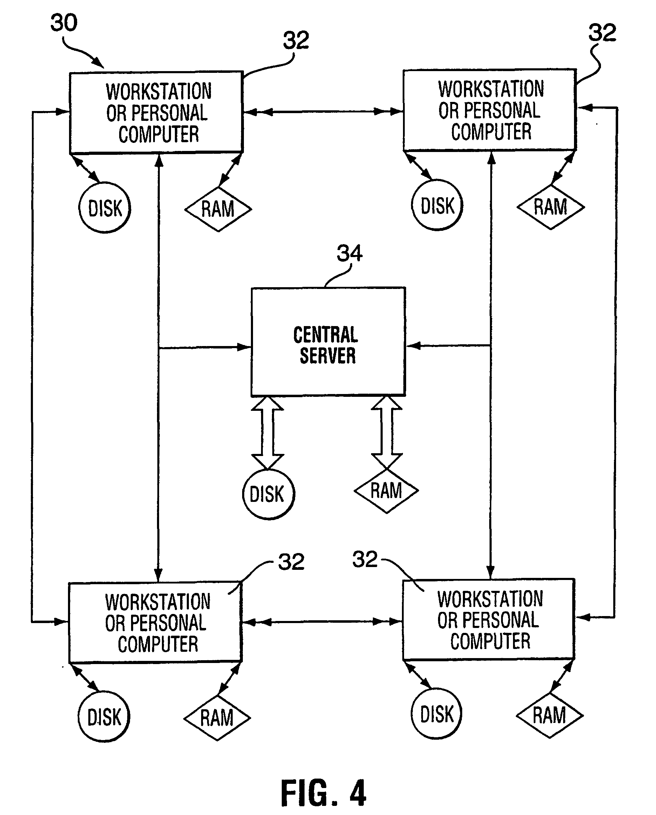

The novel computational model of the present invention can be carried out on the exemplary computer system 30 of Figure 4. Such a system will contain one or more central processing units, CPUs, with an appropriate amount of random access memory, RAM, and storage capacity, such as hard disk or tape, IO devices to link to peripheral units, such as display screens and printers.

The system may be stand alone, as for example a single workstation or personal computer, or may consist of a set of networked CPUs 32, including a server 34, (generally with multiple CPUs) and a number of individual workstations or personal computers, linked together by an Ethernet or fiber-optic network. The MPS and FEA calculations may be performed on software, installed on the CPUs of the network, using either third-party computer codes (e.g., but not limited to, HKS Inc. *Abaqus* or LSTC *LS-Dyna*) or specialty codes written and developed in-house.

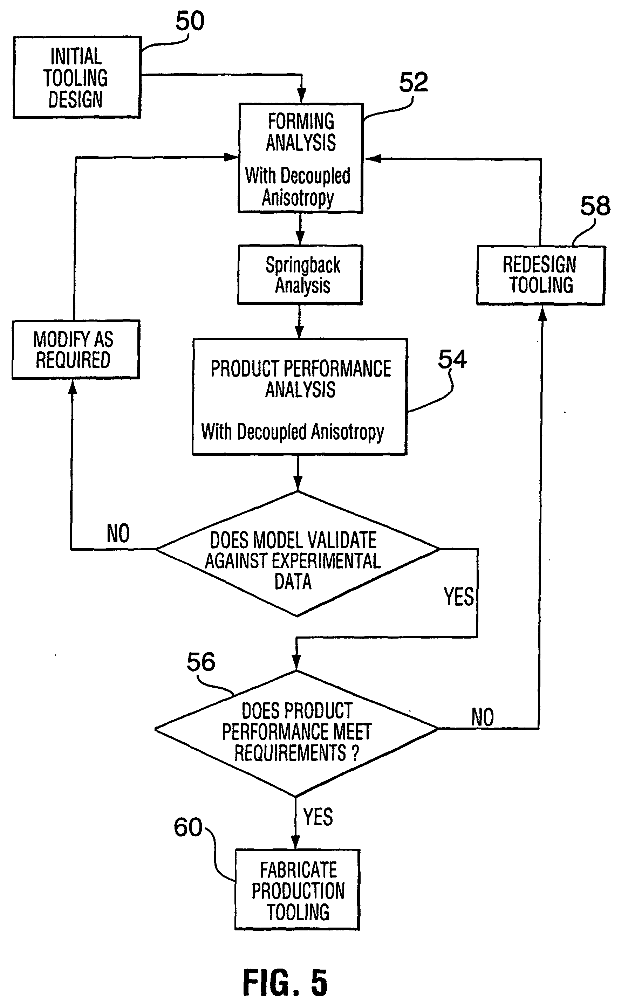

As noted above, the novel computational model described herein is used to optimize forming operations, tooling design and product performance. This process is generally shown in Figure 5. A specific tooling design for a particular article is first proposed (50). The procedure described in Figure 3, performed on the computer system described in Figure 4, is then applied to the initial design (52). The "virtual" article whose fabrication is simulated, is then analyzed for product performance (54). If the product does not meet specifications (56), the tooling and its method or operation must be redesigned (58).

For example, with reference to tooling 14 of Figure 2, if the dome reversal pressure of the "virtual" can bottom, produced by the forming simulation and determined by the performance analysis, were too low, geometry of the domer plug and/or motion of the punch could be altered and the complete FEA could be repeated. Steps 50 through 58 are repeated as necessary until a satisfactory design is found. An essential part of the procedure is validation of model predictions against one (usually the initial) design of a prototype component.

This validation exercise provides the confidence that the model indeed simulates both the forming and performance operations correctly. Modifications to tooling and forming operations may then proceed with a reasonable degree of confidence. Once the optimization procedure described in Figure 5 is complete, production tooling may be fabricated (60).

Although the invention has been described with reference to specific embodiments, this description is not meant to be construed in a limiting sense. Various modifications of the disclosed embodiments, as well as alternative embodiments of the invention, will become apparent to persons skilled in the art upon reference to the description of the invention.

For example, while the foregoing description pertains to metal sheet, the present invention could also be used to predict deformation and formability of nonmetallic materials. It is therefore contemplated that such modifications can be made without departing from the present invention as defined in the appended claims.

### INDUSTRIAL APPLICABILITY

The method embodying the present invention is capable of being used in the material processing industry.

## Claims

1. A method of fabricating an article (60), comprising the steps of:
(a) creating a blank (12) of material having anisotropic mechanical properties;
(b) designing tooling (14) for manufacture of the article by predicting the flow and deformation of the blank using a forming analysis (52) in which an isotropic finite element analysis (isotropic FEA) of the blank is used along with a separate, decoupled, analysis of the anisotropic deformation properties of the blank; and
(c) forming the article from the blank using tooling designed from step (b).

2. The method of claim 1, wherein the blank is generally flat and is formed from rolled sheet having anisotropic mechanical properties.

3. The method of claim 2, wherein the rolled sheet is a metal sheet (10), and the forming analysis includes the step of calculating the response of a small amount of the blank using crystal plasticity theory.

4. The method of claim 3, wherein the forming analysis includes the steps of:
representing the blank and tooling by meshes having a plurality of elements;
defining a set of stress-strain curves depending on the anisotropy of the blank using a crystal plasticity, material point simulator;
assigning an appropriate stress-strain curve from the set to each element of the blank; and
performing finite element analysis to simulate the forming of the article and its performance after forming.

5. The method of claim 4, wherein the step of defining a stress-strain curve for each element includes the step of assigning to each element a curve that lies between an upper bound curve and a lower bound curve.

6. The method of claim 5, wherein the assigning step assigns to a given element a particular curve selected from a set of predefined curves, based on a strain path of each respective element.

7. The method of claim 5, wherein the assigning step assigns to a given element a particular curve obtained by interpolating between two curves from a predefined set of curves, based on a currently recalculated strain path of each respective element.

8. A computer system (30) having a storage device, and a processing unit (32) connected to the storage device, whereby program means are stored on the storage device, and are adapted to be executed by the processing unit, for predicting the flow and deformation of a blank (12) of material having anisotropic deformation properties, using a forming analysis (52) in which an isotropic finite element analysis (isotropic FEA) of the blank is used along with a separate, decoupled analysis of the anisotropic deformation properties of the blank.

9. The computer system of claim 8, wherein the program means calculates, the response of a small amount of the blank using crystal plasticity theory.

10. The computer system of claim 9, wherein the program means further (i) represents the blank as a mesh having a plurality of elements, (ii) predicts a strain path for each element using finite element analysis (FEA), (iii) defines a stress-strain curve for each element by performing a material point simulator (MPS) calculation for each element using its respective strain path, and (iv) performs a further FEA on the elements using the respective stress-strain curve for each element.

11. The computer system of claim 10, wherein the program means further defines a stress-strain curve for each element by assigning to each element a curve that lies between an upper bound curve and a lower bound curve.

12. The computer system of claim 11, wherein the program means assigns the lower bound stress-strain curve to each one of the plurality of elements.

13. The computer system of claim 11, wherein the program means further assigns to a given element a particular curve selected from a set of predefined curves, based on the strain path of each respective element.

14. The computer system of claim 11, wherein the program means further assigns to a given element a particular curve obtained by interpolating between two curves from a predefined set of curves, based on a currently recalculated strain path of each respective element.

15. A computer program product having a storage medium adapted to be read by a computer and including program means stored on the storage medium for predicting the flow and deformation of a blank (12) of material having anisotropic deformation properties, using a forming analysis (52) in which an isotropic finite element analysis (isotropic FEA) of the blank is used along with a separate, decoupled analysis of the anisotropic deformation properties of the blank.

16. The computer program product of claim 15, wherein the program means calculates the response of a small amount of the blank using crystal plasticity theory.

17. The computer program product of claim 16, wherein the program means further (i) represents the blank as a mesh having a plurality of elements, (ii) predicts a strain path for each element using finite element analysis (FEA), (iii) defines a stress-strain curve for each element by performing a material point simulator (MPS) calculation for each element using its respective strain path, and (iv) performs a further FEA on the elements using the respective stress-strain curve for each element.

18. The computer program product claim 17, wherein the program means further defines a stress-strain curve for each element by assigning to each element a curve that lies between an upper bound curve and a lower bound curve.

19. The computer program product of claim 18, wherein the program means assigns the lower bound stress-strain curve to each one of the plurality of elements.

20. The computer program product claim 18, wherein the program means further assigns to a given element a particular curve selected from a set of predefined curves, based on the strain path of each respective element.

21. The computer program product of claim 18, wherein the program means further assigns to a given element a particular curve obtained by interpolating between two curves from a predefined set of curves, based on a currently recalculated strain path of each respective element.

## Patentansprüche

1. Verfahren zur Herstellung eines Artikels (60), mit den folgenden Schritten:
(a) Erzeugen eines Rohlings (12) aus einem Material mit anisotropen mechanischen Eigenschaften;
(b) Ausgestalten von Werkzeug (14) zur Herstellung des Artikels durch Vorhersagen des Flusses und der Verformung des Rohlings mittels einer Formanalyse (52), bei welcher eine isotrope Finite Elemente-Analyse (isotrope FEA) des Rohlings zusammen mit einer separaten entkoppelten Analyse der anisotropen Verformungseigenschaften des Rohlings verwendet wird; und
(c) Ausformen des Artikels aus dem Rohling unter Verwendung des im Schritt (b) ausgestalteten Werkzeugs.

2. Verfahren nach Anspruch 1, wobei der Rohling im wesentlichen flach ist und aus gewalztem Blech mit anisotropen mechanischen Eigenschaften ausgebildet ist.

3. Verfahren nach Anspruch 2, wobei das gewalzte Blech ein Metallblech (10) ist und wobei die Formanalyse den Schritt des Berechnens der Antwort einer kleinen Menge des Rohlings unter Verwendung der Kristallplastizitätstheorie beinhaltet.

4. Verfahren nach Anspruch 3, wobei die Formanalyse die folgenden Schritte beinhaltet:
Darstellen des Rohlings und des Werkzeugs durch Netze mit mehreren Elementen;
Definieren eines Satzes von Beanspruchungs-Belastungs-Kurven abhängig von der Anisotropie des Rohlings unter Verwendung eines Materialpunktsimulators mit Kristallplastizität;
Zuordnen einer geeigneten Beanspruchungsbelastungskurve aus dem Satz zu jedem Element des Rohlings; und
Durchführen einer Finite Elemente-Analyse, um das Formen des Artikels und sein Verhalten nach dem Formen zu simulieren.

5. Verfahren nach Anspruch 4, wobei der Schritt des Definierens einer Beanspruchungsbelastungskurve für jedes Element den Schritt des Zuordnens einer Kurve zu jedem Element beinhaltet, die zwischen einer oberen Grenzkurve und einer unteren Grenzkurve liegt.

6. Verfahren nach Anspruch 5, wobei der Schritt des Zuordnens einem gegebenen Element eine bestimmte Kurve zuordnet, die aus einem Satz von vorher definierten Kurven ausgewählt ist, auf der Grundlage eines Belastungswegs des jeweiligen Wegs.

7. Verfahren nach Anspruch 5, wobei der Schritt des Zuordnens einem gegebenen Element eine bestimmte Kurve zuordnet, die durch Interpolieren zwischen zwei Kurven aus einem vorher bestimmten Satz von Kurven erhalten wird, und zwar auf der Grundlage eines momentan wiederberechneten Belastungswegs des jeweiligen Elements.

8. Computersystem (30) mit eine Speichereinrichtung und einer mit der Speichereinrichtung verbundenen Bearbeitungseinheit (32), wobei Programmmittel in der Speichereinrichtung gespeichert sind und von der Bearbeitungseinheit ausführbar sind, um den Strom und die Verformung eines Rohlings (12) aus einem Material mit anisotropen Verformungseigenschaften vorherzusagen, und zwar unter Verwendung einer Formanalyse (52), bei welcher eine isotrope Finite Elemente-Analyse (isotrope FEA) des Rohlings zusammen mit einer separaten, entkoppelten Analyse der anisotropen Verformungseigenschaften des Rohlings verwendet wird.

9. Computersystem nach Anspruch 8, wobei das Programmmittel die Antwort einer kleinen Menge des Rohlings unter Verwendung der Kristallplastizitätstheorie berechnet.

10. Computersystem nach Anspruch 9, wobei das Programmmittel weiter (i) den Rohling als Netz mit mehreren Elementen darstellt, (ii) eine Belastungsweg für jedes Element durch Finite Elemente-Analyse (FER) vorhersagt, (iii) eine Beanspruchungsbelastungskurve für jedes Element durch Durchführen einer Materialpunktsimulatorberechnung (MPS) für jedes Element unter Verwendung seines jeweiligen Belastungswegs definiert, und (iv) eine weitere FEA für die Elemente durchführt, und zwar unter Verwendung der jeweiligen Beanspruchungsbelastungskurve für jedes Element.

11. Computersystem nach Anspruch 10, wobei das Programmmittel weiter eine Beanspruchungsbelastungskurve für jedes Element definiert, indem es jedem Element eine Kurve zuordnet, die zwischen einer oberen Grenzkurve und einer unteren Grenzkurve liegt.

12. Computersystem nach Anspruch 11, wobei das Programmmittel die untere Beanspruchungs/Belastungs-Grenzkurve jedem der mehreren Elemente zuordnet.

13. Computersystem nach Anspruch 11, wobei das Programmmittel einem gegebenen Element weiter eine bestimmte Kurve zuordnet, die aus einem Satz von vorher definierten Kurven ausgewählt ist, und zwar auf der Basis des Belastungswegs des jeweiligen Elements.

14. Computersystem nach Anspruch 11, wobei das Programmmittel einem gegebenen Element weiter eine bestimmte Kurve zuordnet, die durch Interpolieren zwischen zwei Kurven aus einem vorher bestimmten Satz von Kurven erhalten wird, und zwar auf der Grundlage eines momentan wieder berechneten Belastungswegs des jeweiligen Elements.

15. Computerprogrammprodukt mit einem von einem Computer lesbaren Speichermedium und mit Programmmitteln, die in dem Speichermedium gespeichert sind, um den Strom und die Verformung eines Rohlings (12) aus einem Material mit anisotropen Verformungseigenschaften vorherzusagen, und zwar unter Verwendung einer Formanalyse (52), bei welcher eine isotrope Finite Elemente-Analyse (isotrope FEA) des Rohlings zusammen mit einer separaten, entkoppelten Analyse der anisotropen Verformungseigenschaften des Rohlings verwendet wird.

16. Computerprogrammprodukt nach Anspruch 15, wobei das Programmmittel die Antwort einer kleinen Menge des Rohlings unter Verwendung der Kristallplastizitätstheorie berechnet.

17. Computerprogrammprodukt nach Anspruch 16, wobei das Programmmittel weiter (i) den Rohling als Netz mit mehreren Elementen darstellt, (ii) eine Belastungsweg für jedes Element durch Finite Elemente-Analyse (FER) vorhersagt, (iii) eine Beanspruchungsbelastungskurve für jedes Element durch Durchführen einer Materialpunktsimulatorberechnung (MPS) für jedes Element unter Verwendung seines jeweiligen Belastungswegs definiert, und (iv) eine weitere FEA für die Elemente durchführt, und zwar unter Verwendung der jeweiligen Beanspruchungsbelastungskurve für jedes Element.

18. Computerprogrammprodukt nach Anspruch 17, wobei das Programmmittel weiter eine Beanspruchungsbelastungskurve für jedes Element definiert, indem es jedem Element eine Kurve zuordnet, die zwischen einer oberen Grenzkurve und einer unteren Grenzkurve liegt.

19. Computerprogrammprodukt nach Anspruch 18, wobei das Programmmittel die untere Beanspruchungs/Belastungs-Grenzkurve jedem der mehreren Elemente zuordnet.

20. Computerprogrammprodukt nach Anspruch 18, wobei das Programmmittel einem gegebenen Element weiter eine bestimmte Kurve zuordnet, die aus einem Satz von vorher definierten Kurven ausgewählt ist, und zwar auf der Basis des Belastungswegs des jeweiligen Elements.

21. Computerprogrammprodukt nach Anspruch 18, wobei das Programmmittel einem gegebenen Element weiter eine bestimmte Kurve zuordnet, die durch Interpolieren zwischen zwei Kurven aus einem vorher bestimmten Satz von Kurven erhalten wird, und zwar auf der Grundlage eines momentan wieder berechneten Belastungswegs des jeweiligen Elements.

## Revendications

1. Une méthode de fabrication d'un article (60) comprenant les étapes consistant à :
(a) créer une ébauche (12) dans un matériau présentant des propriétés mécaniques anisotropes ;
(b) concevoir un outillage (14) de fabrication de l'article en prenant en compte une prédiction du fluage et de la déformation de l'ébauche, établie au moyen d'une analyse de déformation (52) dans laquelle on fait appel à une analyse par éléments finis isotropes de l'ébauche en association avec une analyse séparée, découplée, des propriétés de déformation de l'ébauche ; et
(c) façonner l'article à partir de l'ébauche au moyen de l'outillage conçu lors de l'étape (b).

2. Méthode selon la revendication 1, dans laquelle l'ébauche est généralement plane et formée d'une feuille laminée présentant des propriétés mécaniques anisotropes.

3. Méthode selon la revendication 2, dans laquelle la feuille laminée est une feuille de métal (10), et l'analyse de déformation comporte une étape consistant à calculer le comportement sous contrainte d'une petite portion de l'ébauche en appliquant la théorie de la plasticité des cristaux.

4. Méthode selon la revendication 3, dans laquelle l'analyse de déformation comporte les étapes consistant à :
modéliser l'ébauche et l'outil de façonnage sous forme d'un maillage comportant une pluralité d'éléments ;
définir un ensemble de courbes contrainte-déformation dépendant de l'anisotropie de l'ébauche, faisant appel à un simulateur de point matériel selon la théorie de la plasticité des cristaux ;
affecter une courbe contrainte-déformation appropriée à chaque élément de l'ébauche ; et
effectuer une analyse par éléments finis pour modéliser le façonnage de l'article et ses performances après façonnage.

5. Méthode selon la revendication 4, dans laquelle l'étape de définition d'une courbe contrainte-déformation relative à chaque élément comporte l'étape consistant à affecter à chaque élément une courbe comprise entre une courbe limite dite supérieure et une courbe limite dite inférieure.

6. Méthode selon la revendication 5, dans laquelle l'étape d'affectation affecte à un élément donné une courbe particulière choisie parmi un ensemble de courbes prédéterminées, en fonction du trajet de déformation de l'élément concerné.

7. Méthode selon la revendication 5, dans laquelle l'étape d'affectation affecte à un élément donné une courbe particulière obtenue par interpolation entre deux courbes d'un ensemble prédéfini de courbes, en fonction du calcul actualisé du trajet de déformation de chaque élément concerné.

8. Un système informatique (30) possédant un support de mémorisation et une unité de traitement (32) connectée au support de mémorisation, moyennant quoi un programme est stocké dans le support de mémorisation et apte à être exécuté par l'unité de traitement, pour prédire le fluage et les déformations d'une ébauche (12) de matériau de propriétés mécaniques anisotropes, au moyen d'une analyse de déformation (52) dans laquelle une analyse par éléments finis isotropes de l'ébauche est utilisée simultanément avec une analyse séparée, découplée, des propriétés de déformation anisotropes de l'ébauche.

9. Système informatique selon la revendication 8, dans lequel le programme calcule le comportement sous contrainte d'une petite portion de l'ébauche en appliquant la théorie de la plasticité des cristaux.

10. Système informatique selon la revendication 9, dans lequel le programme, de plus, (i) représente l'ébauche comme un maillage formé d'une pluralité d'éléments, (ii) prédit un trajet de déformation pour chaque élément en faisant appel à une analyse par éléments finis, (iii) définit une courbe contrainte-déformation pour chaque élément en utilisant un calcul faisant appel à un simulateur de point matériel pour chaque élément, faisant intervenir son trajet de déformation particulier, et, (iv) effectue de plus une analyse par éléments finis sur les éléments en utilisant les courbes contrainte-déformation relatives à chaque élément.

11. Système informatique selon la revendication 10, dans lequel le programme définit de plus une courbe contrainte-déformation pour chaque élément en affectant à chaque élément une courbe qui se situe entre une courbe limite dite supérieure et une courbe limite dite inférieure.

12. Système informatique selon la revendication 11, dans lequel le programme affecte la courbe contrainte-déformation limite dite inférieure à chaque élément de la pluralité d'éléments.

13. Système informatique selon la revendication 11 dans lequel le programme affecte de plus à un élément donné une courbe particulière choisie dans un ensemble de courbes prédéfinies, en fonction du trajet de déformation de chaque élément concerné.

14. Système informatique selon la revendication 11, dans lequel le programme affecte de plus à un élément donné une courbe particulière obtenue par interpolation entre deux courbes d'un ensemble prédéterminé de courbes, en fonction du calcul actualisé du trajet de déformation de chaque élément concerné.

15. Un appareil informatique programmable possédant un support de mémorisation capable d'être lu par un ordinateur et possédant un programme stocké dans le support de mémorisation pour prédire le fluage et la déformation d'une ébauche (12) de matériau présentant des propriétés de déformation anisotropes, appliquant une analyse de déformation (52) dans laquelle on utilise une analyse par éléments finis de type isotrope de l'ébauche simultanément avec une analyse séparée, découplée, des propriétés de déformation anisotropes de l'ébauche.

16. Programme informatique selon la revendication 15, dans lequel le programme calcule le comportement d'une petite portion de l'ébauche en appliquant la théorie de la plasticité des cristaux.

17. Programme informatique selon la revendication 16, dans lequel le programme, de plus, (i) modélise l'ébauche sous forme d'un maillage comportant une pluralité d'éléments, (ii) prédit un trajet de déformation pour chaque élément au moyen d'une analyse par éléments finis, (iii) définit une courbe contrainte-déformation pour chaque élément en utilisant un simulateur de points matériel selon la théorie de plasticité des cristaux pour chaque élément en utilisant son trajet de déformation particulier, et (iv) effectue une analyse par éléments finis supplémentaire sur les éléments en exploitant la courbe contrainte-déformation particulière relative à chaque élément.

18. Programme informatique selon la revendication 17, dans lequel le programme, de plus, définit une courbe contrainte-déformation pour chaque élément en affectant à chaque élément une courbe comprise entre une courbe limite dite supérieure et une courbe limite dite inférieure.

19. Programme informatique selon la revendication 18, dans lequel le programme affecte la courbe limite dite inférieure à chaque élément de la pluralité d'éléments.

20. Programme informatique selon la revendication 18, dans lequel le programme, de plus, affecte à un élément donné une courbe particulière choisie dans un ensemble prédéterminé de courbes, en fonction du trajet de déformation de chaque élément concerné.

21. Programme informatique selon la revendication 18, dans lequel le programme, de plus, affecte à un élément donné une courbe particulière, obtenue par interpolation entre deux courbes d'un ensemble prédéterminé de courbes, en fonction du calcul actualisé du trajet de déformation de chaque élément concerné.
